# EUROPEAN PATENT SPECIFICATION

(11) **EP 1 654 192 B1**
(45) Date of publication and mention of the grant of the patent: **02.11.2006**
(21) Application number: 04757210.2
(22) Date of filing: 22.07.2004
(51) Int. Cl.: C01B 3/04, C01B 3/56, C01B 3/02, C01C 1/04, C25B 1/04, C01B 23/00, C01C 1/02

(54) **METHOD FOR THE POINT OF USE PRODUCTION OF AMMONIA FROM WATER AND NITROGEN**
VERFAHREN ZUR HERSTELLUNG VON AMMONIAK AUS WASSER UND STICKSTOFF AM EINSATZORT
PROCEDE POUR LA PRODUCTION AU POINT D'UTILISATION D'AMMONIAC A PARTIR D'EAU ET D'AZOTE

(30) Priority: 23.07.2003 US 626266
(43) Date of publication of application: 10.05.2006
(73) Proprietor: Entegris, Inc., Chaska, MN 55318 (US)
(72) Inventor: SPIEGELMAN, Jeffrey, J., San Diego, CA 92130 (US); ALVAREZ, Jr., Daniel, San Diego, CA 92126 (US)
(74) Representative: Gambell, Derek
(86) International application number: PCT/US2004/023594
(87) International publication number: WO 2005/009894

(56) References cited:
- US-A- 3 616 334
- US-A- 4 045 315
- US-A- 4 427 504
- US-A1- 2003 094 098
- US-A1- 2003 205 532

## Description

### BACKGROUND OF THE INVENTION

There is considerable ongoing effort to develop and produce low cost, high performance (high output) light emitting diodes (LEDs). Such LEDs are intended for such disparate uses as in outdoor displays, vehicle lighting, flashlights, safety signaling systems, traffic signals, lasers, medical devices and indoor lighting. LEDs are expected to replace the current incandescent bulbs or fluorescent lighting tubes if they can reach the flux intensity and low cost of current bulbs. The advantage LEDs have is very low power and heat generation for a given light intensity, small size, and extremely long life well in excess of 50,000 hrs.

These LEDs are made by metal organic chemical vapor deposition (MOCVD) using materials such as gallium-, aluminum gallium- and indium gallium nitrides and phosphides. In a process currently of significant interest, gallium nitride is deposited from a gaseous mixture of ammonia, hydrogen and trimethyl gallium. Similar, gallium nitride is being considered for "blue lasers," i.e., lasers which emit blue light. Because blue light has a shorter wavelength than red, yellow or green light, blue lasers are anticipated to be capable of forming compact disks which will have a much higher information density than is presently the case with compact disks produced with red laser light. Gallium nitride for such blue lasers would be manufactured in the same type of ammonia/hydrogen/trimethyl gallium gaseous environment as described above for the high capacity LEDs. A high purity supply of hydrogen, ammonia, and nitrogen is essential to production of these devices.

The LEDs, blue lasers and integrated circuits are all manufactured with electron accepting p-type dopants. Such products are extremely sensitive to the presence of electron-donating n-type materials, and very small concentrations of such n-type are sufficient to deactivate the p-type dopants and impair or destroy the performance and operability of the integrated circuits, LEDs and blue lasers. Oxygen is a particularly efficient n-type material, and the presence of molecular oxygen causes lattice defects and is detrimental to the desired band gap properties in the semiconductor or laser material. Even very low concentrations of oxygen (between 10 and 100 ppb) can be sufficient to cause sufficient reduction in performance or operability (especially in wavelength control) so as to require discarding of the product after manufacture or to significantly shorten operating lifetime

Similar detrimental effects are observed with the presence of sub ppm levels of water vapor, gaseous hydrocarbons and/or carbon dioxide gas in hydride gases such as ammonia, since those materials lead to degradation of the products formed by deposition of active layers of metals or metal compounds from a hydride gas environment. Water is one of the most common and yet most difficult impurities to remove from the gases, especially hydride gasses such as ammonia. In the manufacture of the semiconductor products described above, moisture contents of the depositing gases which are in the ppm range are excessively wet. To form satisfactory products, the water content of the depositing gases must be reduced to the parts per billion (ppb) range, usually down to no more than about 100 ppb. See Whitlock et al, "High Purity Gases," in Ruthven, ed., Encyclopedia of Separation Technology, vol. 1, pp. 987-1000 (1997).

In most high-purity product manufacturing processes, it has been conventional for hydride gases to be stored in and supplied from standard gas cylinders. The volume of gas in each such cylinder is of course limited, so that in larger scale manufacturing processes, it becomes necessary for process operators frequently to replace emptied cylinders and replace them with fresh, full cylinders. This frequent handling and movement of heavy, awkward gas cylinders represents a safety hazard to the operators, as well as providing opportunities for gas leakage and increasing the cost of manufacturing. Also importantly, each time an empty gas cylinder is detached from the system and a new full cylinder attached, there is an opportunity for ambient contaminant gases, such as oxygen, carbon dioxide and water vapor, to enter the system, thus increasing the decontamination load on the system and accelerating the system degradation. Higher volume production may also require large banks of cylinders to be connected in parallel, increasing the probability of contamination problems, and making it very difficult to track down and replace a contaminated cylinder. The purity of gasses delivered in these cylinders may also be compromised due to out-gassing of impurities from the cylinder walls, since the container surface area to volume ratio is higher than for bulk delivery in large containers. This same effect can change the purity of cylinder stored gasses over time as well, since out-gassing impurities can increase impurity concentrations the longer a gas is stored. As the quantity of gas in the cylinder is reduced due to consumption, the impurity levels will also increase since the impurity desorption fluxes are being accumulated in a total quantity of gas that is decreasing. Gas delivered in cylinders is generally much more expensive than gas delivered in bulk, especially for premium high purity levels in low ppb ranges. The customer will pay a significant adder for delivery, onsite storage, and pickup of cylinders from the gas company. In addition, it has become the common practice of ammonia users to change cylinders with 20% or more of the total volume of the cylinder remaining due to this concentration of impurities "at the bottom of the barrel". Clearly, there is a need for a more economic alternative.

The industry is beginning to require gases to be supplied in large volume containers which need to be changed only at infrequent intervals (usually measured in months rather than hours, as with the individual gas cylinders). A preferred type of large volume container is the "tube trailer," a semi-trailer which is constructed with a number of "tubes," high capacity extended high pressure vessels, which are interconnected or operate through a common manifold. A tube trailer can be parked at a manufacturing facility and attached to the gas supply system, and will typically have sufficient gas capacity to supply the hydride gas to the facility for a period of months. Bulk hydrogen may be delivered as pressurized gas in tube trailers or as a cryogenic liquid. Liquid hydrogen requires sophisticated, expensive storage requirements and is not widely distributed throughout the world. However, even these bulk delivery systems can introduce contamination every time a new container is connected or disconnected from the plant, or the cryogenic fluid is replenished. Furthermore, contamination can be introduced in the piping systems that deliver the bulk gas to the point of use, or process tool. Removing and controlling this contamination requires the use of distributed purifiers, which may be placed at multiple locations in the distribution system. While effective in controlling contamination, this distributed purification scheme can be expensive to purchase, install, and maintain.

It would be of interest, for the flexible, low cost production of high performance LEDs and blue lasers, to manufacture high purity ammonia, hydrogen, and nitrogen from de-ionized (DI) water and standard nitrogen. Point of use production eliminates the contamination associated with delivery from bulk storage and cylinders, and the need for layers of distributed purification. De-ionized water and standard purity nitrogen are very common reagents and are universally available in all semiconductor plants. Furthermore, point of use production of high purity ammonia, hydrogen, and nitrogen from DI water is suitable for plants being set up in countries where there is limited chemical industry infrastructure, and the production of high purity gasses does not exist. However, current DI water to hydrogen POU production equipment cannot create hydrogen of a quality suitable for most semiconductor applications and as specifications for fuel cells increase, for that market as well.

### SUMMARY OF THE INVENTION

It is an object of the present invention to provide a method for the manufacture of high purity ammonia, hydrogen, and nitrogen from de-ionized (DI) water and standard nitrogen. In a first embodiment of the present invention, the method comprises feeding a quantity of de-ionized water to a hydrogen generator, producing hydrogen from the de-ionized water, and purifying the hydrogen with a hydrogen purifier. The method further comprises producing purified nitrogen by passing standard quality nitrogen through a nitrogen purifier and, contacting the purified hydrogen and purified nitrogen with a catalyst bed, wherein a portion of the purified hydrogen purified nitrogen react to form a quantity of ammonia.

In another embodiment of the present invention, the method comprises de-gassing the de-ionized water to remove a portion of dissolved gasses, feeding the de-ionized, degassed water to a hydrogen generator, and producing hydrogen from the de-ionized, degassed water. The method further comprises producing a quantity of purified hydrogen by passing the hydrogen through a hydrogen purifier, producing purified nitrogen by passing standard quality nitrogen through a nitrogen purifier, compressing said the purified hydrogen and the purified nitrogen, and contacting the compressed purified hydrogen and purified nitrogen with a catalyst bed, wherein a portion of the purified hydrogen and a portion of the purified nitrogen react to form a quantity of ammonia. Purified ammonia is produced by passing the ammonia through an ammonia purifier and then delivered to a semiconductor process tool.

### BRIEF DESCRIPTION OF THE DRAWINGS

The present invention will be better understood when consideration is given to the following detailed description thereof. Such description makes reference to the annexed drawings, wherein:
FIG. 1 is a schematic flow diagram of a process for making purified nitrogen, hydrogen, and ammonia from water and nitrogen, in accordance with an embodiment of the present invention.
FIG. 2 is a schematic diagram of the regenerable purifiers of FIG. 1, in accordance with an embodiment of the present invention.
FIG. 3 is a process flow diagram for the manufacture of purified nitrogen, hydrogen, and ammonia from water and nitrogen, in accordance with an embodiment of the present invention.

### DETAILED DESCRIPTION OF THE PREFERRED EMBODIMENTS

It is an object of the present invention, useful for the flexible, low cost production of high performance LEDs and blue lasers, to provide a method for the manufacture of high purity ammonia, hydrogen, and nitrogen from de-ionized (DI) water and standard nitrogen. Point of use production eliminates the contamination associated with delivery from bulk storage and cylinders, and the need for layers of distributed purification. De-ionized water and standard purity nitrogen are very common reagents and are universally available in all semiconductor plants. Furthermore, point of use production of high purity ammonia, hydrogen, and nitrogen from DI water and standard nitrogen is suitable for plants being set up in countries where there is limited chemical industry infrastructure, and the production and distribution of ultra high purity gasses does not exist.

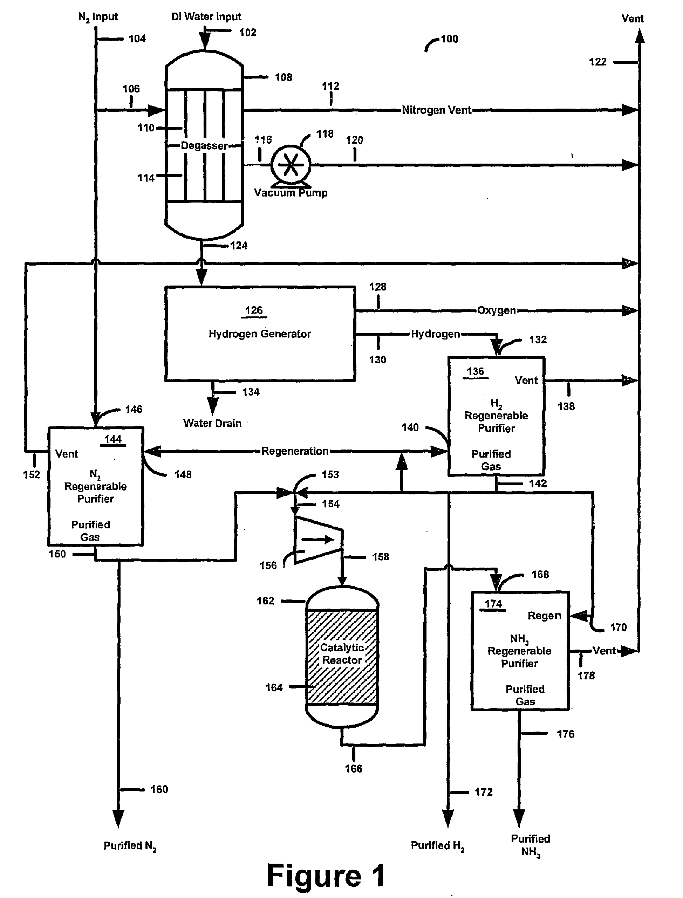

FIG. 1 is a schematic flow diagram 100 of a process for making purified nitrogen, hydrogen, and ammonia from water and nitrogen, in accordance with an embodiment of the present invention. De-ionized (DI) water is introduced to the process at input 102, and fed to de-gassing unit 108 (degasser). The degasser 108 is a two stage device that strips dissolved gasses from the DI water with nitrogen in a first stage 110, followed by vacuum stripping in a second stage 114. As an example, degasser 108 may be a membrane contactor available from Liqui-Cel®. In the first stage 110, nitrogen is introduced at input 106, purged though the system, and vented at 112. In the second stage 114, a vacuum pump 118 is connected to input 116 and vented through line 120. Typically, dissolved gasses leaving the degasser 108 have less than about 1 ppb oxygen, and about 1 ppm CO₂.

An alternative degassing device would be a single stage device used in combination with pre-heated DI water. The pre-heated water would facilitate the degassing of the oxygen and CO₂. Pulling vacuum on the degasser would eliminate the unwanted gas from the heated DI water. Pre-heating the DI water more than about 90°C and then degassing with a per-fluorinated membrane contactor, such as a pHasor®II manufactured by Mykrolis Corporation (Billerica, MA), would be a preferable embodiment. Still higher temperature DI water could be entertained, particularly if such higher temperatures improved the efficiency of the hydrogen generator.

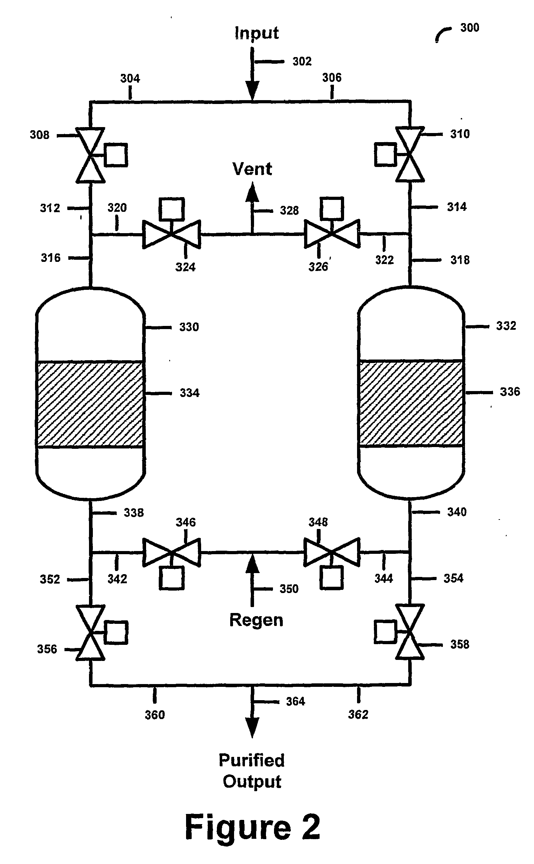

De-gassed water 124 leaving the degasser 108 is introduced to the hydrogen generator 126. In the hydrogen generator, water is de-composed to hydrogen gas and oxygen gas by electrolytic means, as is well known to those skilled in the art. For example, a hydrogen generator 126 manufactured by Proton Energy Systems (as the HOGEN® line of hydrogen generators) may be used. Hydrogen gas produced by the generator has a typical water impurity level of less than about 5 ppm, and an oxygen impurity level of less than about ppm. These impurity levels are too high for end use and require further purification. Hydrogen delivery pressures are typically less than 14 bar. Oxygen produced by generator 126 is vented via output 128. Excess water is drained via output 134. The hydrogen output 130 is fed to input 132 of the hydrogen regenerable purifier 136. The detailed configuration of the regenerable purifiers is shown below in FIG. 2. In the hydrogen purifier, the feed hydrogen at input 132 is passed through one or more adsorption beds filled with purification media. The media may be composed of high surface area oxides chosen from among oxides of barium, calcium, iron, lithium, manganese, molybdenum, potassium, rhenium, sodium, strontium, titanium, tungsten, and vanadium, as disclosed in US patent 6,241,955. Alternatively, the media may be composed of nickel metal and nickel oxide supported on a high surface area substrate as disclosed in US patent 4,713,224 in combination with titanium oxides as disclosed in US patent 6,059,859. Hydrogen purifier 136 removes impurities such as H₂O, CO, CO₂, O₂ and hydrocarbons. Remaining impurity levels in the purified hydrogen output 142 are less than about 100 ppb, but preferably less than about 10 ppb, and more preferably less than about 1 ppb. Hydrogen purifier 136 has a regeneration gas input 140, and utilizes purified hydrogen from the output 142 for regeneration. Regeneration gasses are vented at output 138 to system vent 122.

The purified hydrogen output at 142 is delivered to a number of locations within process 100. It is utilized for regeneration of the nitrogen purifier 144 (at input 148), regeneration of the ammonia purifier 174 (at input 170), to compressor 156 for the production of ammonia, and for delivery to the process tool at output 172.

Nitrogen fed to the process 100 at input 104 is fed to the nitrogen regenerable purifier 144 at input 146. The detailed configuration of the regenerable purifiers is shown below in FIG. 2. In the nitrogen purifier, the feed nitrogen at input 146 is passed through one or more adsorption beds filled with purification media. The media may be composed of nickel metal and nickel oxide supported on a high surface area substrate as disclosed in US patent 4,713,224. Other media may also be utilized as may be known to those skilled in the art. Nitrogen purifier 144 removes impurities such as H₂O, CO, CO₂, O₂ and hydrocarbons. Remaining impurity levels in the purified nitrogen output 150 are less than about 100 ppb, but preferably less than about 10 ppb, and more preferably less than about ppb. Nitrogen purifier 144 has a regeneration gas input 148, and utilizes purified hydrogen from the hydrogen purifier 136 for regeneration. Regeneration gasses are vented at output 152 to system vent 122. The purified nitrogen at output 150 is delivered to multiple locations within process 100. Purified nitrogen is supplied to the point of use at output 160, and to mixing point 153 where it is added to the purified hydrogen prior to compressor input 154. Purified nitrogen may also be used in various purge functions in purifiers 136, 144, and 174 (not shown), and optionally may be used for degassing the DI water as well.

Purified nitrogen and purified hydrogen is mixed at 153 and fed to compressor input 154. Due to the high purity requirements of the end product ammonia, compressor 156 should produce as little contamination as possible. An air driven diaphragm compressor, such as that made by Haskell, would be suitable. Other types may also be utilized, if suitable contamination levels can be maintained. Pressure levels exiting compressor 156 should be below about 100 bar, preferably in the range of about 30 to about 80 bar. The compressed nitrogen/hydrogen mixture exits the compressor at 158 and enters the ammonia reactor 162. Stoichiometric requirements for the production of pure ammonia necessitate a mole ratio of 3:1 hydrogen/nitrogen. The actual ratios may vary, depending on the conversion to ammonia and the amount of unreacted nitrogen and or hydrogen desired in the product stream. In the present invention, the product ammonia is primarily utilized for the point of use production of MOCVD films, where hydrogen and/or nitrogen are often mixed with ammonia prior to entry into the deposition chamber. The ammonia production process can therefore be tailored to the downstream CVD process, and the requirement for 100% ammonia conversion is not a strict requirement. Subsequently, the extreme conditions required by industrial ammonia production processes which include the complete separation of ammonia from unreacted hydrogen and nitrogen, and the recycle of theses gasses back to the reactor input, are not required in the present invention. Ammonia reactor 162 contains a heated catalyst bed where the hydrogen/nitrogen is reacted to form ammonia. As mentioned previously, 100% conversion to ammonia may not be required. Operating conditions of the catalyst bed would include an operating total pressure below about 100 bar, preferably in the range of about 30 to about 80 bar, most preferably about 50 bar; an operating temperature in the range of about 50 to about 400 °C, preferably about 100 °C. The catalyst bed 164 may comprise a standard iron oxide (magnetite) ammonia catalyst, a precious metal (platinum or palladium) promoted iron oxide catalyst, or ruthenium supported on carbon, alumina, or zeolites. These catalysts may be used alone or in combination. Other catalysts may also be used as disclosed or known in the art.

Ammonia and any unreacted nitrogen and hydrogen exit the ammonia reactor at 166 and enter the ammonia purifier 174 at input 168. The detailed configuration of the regenerable purifiers is shown below in FIG. 2. In the ammonia purifier, the feed ammonia mixture at input 174 is passed through one or more adsorption beds filled with purification media. The media is composed of high surface area oxides chosen from among oxides of barium, calcium, iron, lithium, manganese, molybdenum, potassium, rhenium, sodium, strontium, titanium, tungsten, and vanadium, as disclosed in US patent 6,241,955. Ammonia purifier 174 removes impurities such as H₂O, CO, CO₂, O₂ and hydrocarbons. Any hydrogen and nitrogen within the ammonia are "transparent" to the purifier and are not considered impurities. That is, they are not removed by the ammonia purifier, and are purified as well. Remaining impurity levels in the purified ammonia output 176 are less than about 100 ppb, but preferably less than about 10 ppb, and more preferably less than about 1 ppb. Ammonia purifier 174 has a regeneration gas input 170, and utilizes purified hydrogen from the hydrogen purifier output 142 for regeneration. Regeneration gasses are vented at output 178 to system vent 122. The purified ammonia is delivered to the point of use via output 176.

FIG. 2 is a schematic diagram of the regenerable purifiers 136, 144, and 174 of FIG. 1, in accordance with an embodiment of the present invention. As an example, assume that vessel 330 is purifying and vessel 332 is regenerating. Gas to be purified enters input 302 and is directed to adsorption vessels 330 via valves 308 and lines 304, 312, and 316. The gas is passed through adsorption bed 334 and is purified, leaving the vessel 330 at output 338. The purified gas passes through valve 356 via lines 352 and 360 to output 364. Valves 324 and 346 are closed to prevent contamination from the vent and regeneration gasses. While in the purification mode for vessel 330, vessel 332 may or may not be regenerating, depending on the purification capacity of the adsorption beds. As another example, assume that vessel 332 is regenerating. Regeneration gas enters input 350 and is directed through valve 348 to vessel 332 via line 340. After passing though bed 336, the regeneration gas and impurities extracted form bed 336 exit vessel 332 at input 318, and exit the system to vent 328 through valve 326 and line 322. Bed 336 may or may not be heated during regeneration, but preferably is heated. The pressure utilized during regeneration is usually close to about 1 bar, to aid in the desorption of impurities from the bed media. Valves 310 and 358 remain closed during regeneration to prevent contamination of the product and inlet gas steams. Their closure is also required to maintain the pressure differential between the product gas (at approximately 10 bar) and the regeneration at approximately 1 bar. In the illustrated configuration, the regeneration stream is counter-current to the purification flow through the bed 336. However, it is also possible to introduce the regeneration gas to input 328 for co-current regeneration.

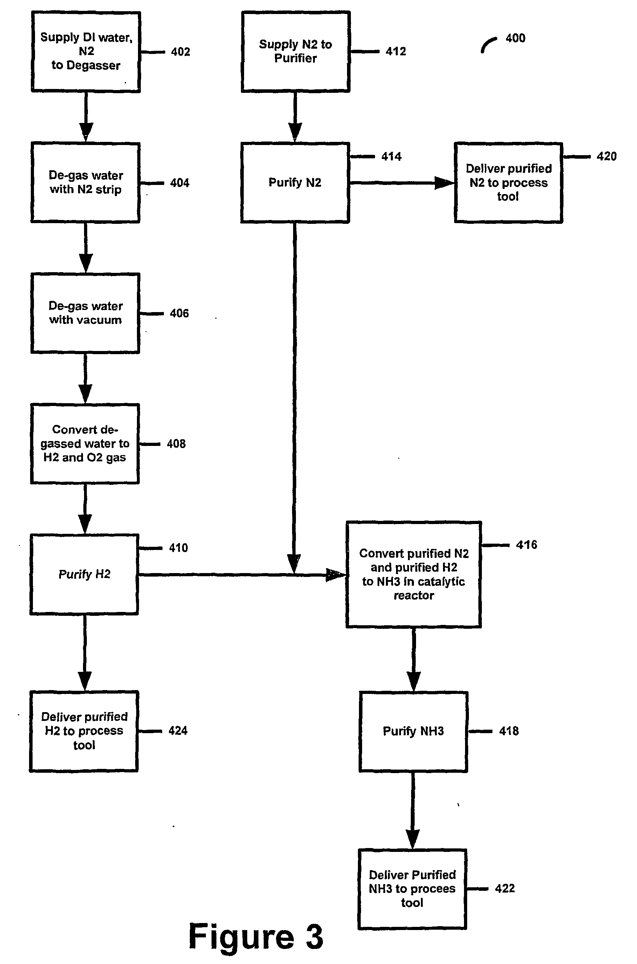

FIG. 3 is a process flow diagram 400 for the manufacture of purified nitrogen, hydrogen, and ammonia from water and nitrogen, in accordance with an embodiment of the present invention. In step 402, DI water is supplied to the de-gassing unit. In step 404, the water is de-gassed in a first stage using a nitrogen strip. In step 406, the DI water is further de-gassed in a second stage using a vacuum. In step 408, the de-gassed, DI water is converted to gaseous hydrogen and oxygen in the hydrogen generator. In step 410, the hydrogen is purified. In step 412, standard purity nitrogen is supplied to the nitrogen purifier. In step 414, the nitrogen is purified. The purified nitrogen from step 414 and the purified hydrogen from step 410 are converted to ammonia in step 416. The ammonia is purified in step 418, and delivered to the process tool in step 422. Purified hydrogen from step 410 is delivered to the process tool in step 424. Purified nitrogen from step 414 is delivered to the process tool in step 420.

While various embodiments have been described above, it should be understood that they have been presented by way of example only, and not limitation. Thus, the breadth and scope of an embodiment of the present invention should not be limited by any of the above described exemplary embodiments, but should be defined only in accordance with the following claims.

## Claims

1. A method for producing ammonia at a point of use from liquid water and nitrogen, comprising:
feeding a quantity of de-ionized water to a hydrogen generator;
producing a quantity of hydrogen from the quantity of de-ionized water utilizing said hydrogen generator;
producing a quantity of purified hydrogen by passing said quantity of hydrogen through a hydrogen purifier;
producing a quantity of purified nitrogen by passing a quantity of nitrogen through a nitrogen purifier; and
contacting said quantity of purified hydrogen and said quantity of purified nitrogen with a catalyst bed, wherein a portion of said purified hydrogen and a portion of said purified nitrogen react to form a quantity of ammonia at the point of use.

2. The method as recited in claim 1, further comprising:
de-gassing said quantity of de-ionized water prior to feeding the de-ionized water to said hydrogen generator, to remove a portion of dissolved gasses in said quantity of de-ionized water, and optionally
wherein said quantity of de-ionized water is degassed in a membrane contactor, having a first stage followed by a second stage,
especially wherein in said first stage, a first portion of said dissolved gassed are removed by nitrogen stripping, or
wherein in said second stage, a second portion of said dissolved gasses are removed by vacuum stripping.

3. The method as recited in claim 1, further comprising:
compressing said quantity of purified hydrogen and said quantity of purified nitrogen prior to contacting said quantity of purified hydrogen and said quantity of purified nitrogen with said catalyst bed, and optionally
wherein said quantity of purified hydrogen and said quantity of purified nitrogen are compressed to a pressure between about 10 to about 100 atmospheres, absolute.

4. The method as recited in claim 1, further comprising:
producing a quantity of purified ammonia at the point of use by passing said quantity of ammonia through an ammonia purifier.

5. The method as recited in claim 4, a) further comprising:
delivering a portion of said quantity of purified ammonia to a semiconductor process tool at the point of use, or
b) wherein said ammonia purifier comprises a high surface area metal oxide comprising oxides of barium, calcium, iron, lithium, manganese, molybdenum, potassium, rhenium, sodium, strontium, titanium, tungsten or vanadium, or
c) wherein at least one of said ammonia purifier, said hydrogen purifier, and said nitrogen purifier are regenerated with a portion of said quantity of purified hydrogen, or
d) wherein the concentration of an impurity in said quantity of purified ammonia is reduced to less than about 50 ppb, or
e) wherein the concentration of an impurity in said quantity of purified ammonia is reduced to less than about 10 ppb.

6. The method as recited in claim 1, wherein a) said hydrogen purifier comprises
a high surface area metal oxide comprising oxides of barium, calcium, iron, lithium, manganese, molybdenum, nickel, potassium, rhenium, sodium, strontium, titanium, tungsten, or vanadium; and optionally, metallic nickel, or
b) said nitrogen purifier comprises a nickel catalyst, or
c) said hydrogen generator produces hydrogen from water by electrolytic means, or
d) the concentration of an impurity in said quantity of purified hydrogen is reduced to less than about 50 ppb, or
ae) the concentration of an impurity in said quantity of purified nitrogen is reduced to less than about 50 ppb, or
f) the concentration of an impurity in said quantity of purified hydrogen is reduced to less than about 10 ppb, or
g) the concentration of an impurity in said quantity of purified nitrogen is reduced to less than about 10 ppb.

7. A method for producing point of use ammonia from liquid water and nitrogen, comprising:
de-gassing a quantity of de-ionized water, to remove a portion of dissolved gasses in said quantity of de-ionized water;
feeding a quantity of said de-ionized, de-gassed water to a hydrogen generator;
producing a quantity of hydrogen from the quantity of said de-ionized, degassed water utilizing said hydrogen generator;
producing a quantity of purified hydrogen by passing said quantity of hydrogen through a hydrogen purifier;
producing a quantity of purified nitrogen by passing a quantity of nitrogen through a nitrogen purifier;
compressing said quantity of purified hydrogen and said quantity of purified nitrogen;
contacting said compressed quantity of purified hydrogen and said compressed quantity of purified nitrogen with a catalyst bed, wherein a portion of said purified hydrogen and a portion of said purified nitrogen react to form a quantity of ammonia;
producing a quantity of purified ammonia at the point of use by passing said quantity of ammonia through an ammonia purifier; and
delivering a portion of said quantity of purified ammonia to a semiconductor process tool at the point of use.

8. A method for producing purified hydrogen gas from liquid water, at a point of use comprising:
feeding a quantity of de-ionized water to a degasser sufficient to remove oxygen to a level of about 1 ppb or less and CO₂ to a level of about 1 ppm or less;
feeding said degassed water to a hydrogen generator;
producing a quantity of hydrogen from the quantity of de-ionized water utilizing said hydrogen generator;
producing a quantity of purified hydrogen at the point of use by passing said quantity of hydrogen through a hydrogen purifier.

## Patentansprüche

1. Ein Verfahren zur Herstellung von Ammoniak aus flüssigem Wasser und Stickstoff am Einsatzort, umfassend:
Zuführen einer Menge an deionisiertem Wasser zu einem Wasserstofferzeuger;
Herstellen einer Menge an Wasserstoff aus der Menge an deionisiertem Wasser unter Verwendung besagten Wasserstofferzeugers;
Herstellen einer Menge an gereinigtem Wasserstoff mittels Durchleiten besagter Menge an Wasserstoff durch ein Wasserstoffreinigungsgerät;
Herstellen einer Menge an gereinigtem Stickstoff mittels Durchleiten einer Menge an Stickstoff durch ein Stickstoffreinigungsgerät; und
Inkontaktbringen besagter Menge an gereinigtem Wasserstoff und besagter Menge an gereinigtem Stickstoff mit einem Katalysatorbett, worin ein Teil besagten gereinigten Wasserstoffs und ein Teil besagten gereinigten Stickstoffs reagieren, um eine Menge an Ammoniak am Einsatzort zu bilden.

2. Das wie in Anspruch 1 dargestellte Verfahren, außerdem umfassend:
Entgasen besagter Menge an deionisiertem Wasser vor Zuführen des deionisierten Wassers zu besagtem Wasserstofferzeuger, um einen Teil der gelösten Gase in besagter Menge an deionisiertem Wasser zu entfernen, und gegebenenfalls
worin besagte Menge an deionisiertem Wasser in einem Membran-Kontaktor mit einer ersten Stufe und nachfolgend einer zweiten Stufe entgast wird,
insbesondere worin in besagter erster Stufe ein erster Teil besagter gelöster Gase mittels Stickstoff-Stripping entfernt wird, oder
worin in besagter zweiter Stufe ein zweiter Teil besagter gelöster Gase mittels Vakuum-Stripping entfernt wird.

3. Das wie in Anspruch 1 dargestellte Verfahren, außerdem umfassend:
Komprimieren besagter Menge an gereinigtem Wasserstoff und besagter Menge an gereinigtem Stickstoff vor Inkontaktbringen besagter Menge an gereinigtem Wasserstoff und besagter Menge an gereinigtem Stickstoff mit besagtem Katalysatorbett, und gegebenenfalls:
worin besagte Menge an gereinigtem Wasserstoff und besagte Menge an gereinigtem Stickstoff auf einen Druck zwischen etwa 10 bis etwa 100 Atmosphären absolut komprimiert werden.

4. Das wie in Anspruch 1 dargestellte Verfahren, außerdem umfassend:
Herstellen einer Menge an gereinigtem Ammoniak am Einsatzort mittels Durchleiten besagter Menge an Ammoniak durch ein Ammoniakreinigungsgerät.

5. Das wie in Anspruch 4 dargestellte Verfahren,
a) außerdem umfassend: Abgabe eines Teils besagter Menge an gereinigtem Ammoniak an ein Halbleiter-Prozessequipment am Einsatzort, oder
b) worin besagtes Ammoniakreinigungsgerät ein Metalloxid mit großer Oberfläche umfasst, das Oxide von Barium, Calcium, Eisen, Kalium, Lithium, Mangan, Molybdän, Natrium, Rhenium, Strontium, Titan, Wolfram und Vanadium umfasst, oder
c) worin wenigstens ein Reinigungsgerät von besagtem Ammoniakreinigungsgerät, besagtem Wasserstoffreinigungsgerät und besagtem Stickstoffreinigungsgerät mit einem Teil besagter Menge an gereinigtem Wasserstoff regeneriert wird, oder
d) worin die Konzentration einer Verunreinigung in besagter Menge an gereinigtem Ammoniak auf weniger als etwa 50 ppb verringert wird, oder
e) worin die Konzentration einer Verunreinigung in besagter Menge an gereinigtem Ammoniak auf weniger als etwa 10 ppb verringert wird.

6. Das wie in Anspruch 1 dargestellte Verfahren, worin
a) besagtes Wasserstoffreinigungsgerät umfasst: ein Metalloxid mit großer Oberfläche, das Oxide von Barium, Calcium, Eisen, Kalium Lithium, Mangan, Molybdän, Natrium, Nickel, Rhenium, Strontium, Titan, Wolfram und Vanadium umfasst, und gegebenenfalls metallisches Nickel, oder
b) besagtes Stickstoffreinigungsgerät einen Nickel-Katalysator umfasst, oder
c) besagter Wasserstofferzeuger Wasserstoff aus Wasser mit Hilfe elektrolytischer Mittel produziert, oder
d) die Konzentration einer Verunreinigung in besagter Menge an gereinigtem Wasserstoff auf weniger als etwa 50 ppb verringert wird, oder
e) die Konzentration einer Verunreinigung in besagter Menge an gereinigtem Stickstoff auf weniger als etwa 50 ppb verringert wird, oder
f) die Konzentration einer Verunreinigung in besagter Menge an gereinigtem Wasserstoff auf weniger als etwa 10 ppb verringert wird, oder
g) die Konzentration einer Verunreinigung in besagter Menge an gereinigtem Stickstoff auf weniger als etwa 10 ppb verringert wird.

7. Ein Verfahren zur Herstellung von Ammoniak aus flüssigem Wasser und Stickstoff am Einsatzort, umfassend:
Entgasen einer Menge an deionisiertem Wasser, um einen Teil der gelösten Gase in besagter Menge an deionisiertem Wasser zu entfernen;
Zuführen einer Menge an besagtem deionisierten, entgasten Wasser zu einem Wasserstofferzeuger;
Herstellen einer Menge an Wasserstoff aus der Menge an besagtem deionisierten, entgasten Wasser unter Verwendung besagten Wasserstoff erzeugers;
Herstellen einer Menge an gereinigtem Wasserstoff mittels Durchleiten besagter Menge an Wasserstoff durch ein Wasserstoffreinigungsgerät;
Herstellen einer Menge an gereinigtem Stickstoff mittels Durchleiten einer Menge an Stickstoff durch ein Stickstoffreinigungsgerät;
Komprimieren besagter Menge an gereinigtem Wasserstoff und besagter Menge an gereinigtem Stickstoff;
Inkontaktbringen besagter komprimierter Menge an gereinigtem Wasserstoff und besagter komprimierter Menge an gereinigtem Stickstoff mit einem Katalysatorbett, worin ein Teil besagten gereinigten Wasserstoffs und ein Teil besagten gereinigten Stickstoffs reagieren, um eine Menge an Ammoniak zu bilden;
Herstellen einer Menge an gereinigtem Ammoniak am Einsatzort mittels Durchleiten besagter Menge an Ammoniak durch ein Ammoniakreinigungsgerät; und
Abgabe eines Teils besagter Menge an gereinigtem Ammoniak an ein Halbleiter-Prozessequipment am Einsatzort.

8. Ein Verfahren zur Herstellung von gereinigtem Wasserstoffgas aus flüssigem Wasser am Einsatzort, umfassend:
Zuführen einer Menge an deionisiertem Wasser zu einem Entgaser, der hinreichend ist, um Sauerstoff auf einen Level von etwa 1ppb oder weniger und CO₂ auf einen Level von etwa 1 ppm oder weniger zu entfernen;
Zuführen besagten entgasten Wassers zu einem Wasserstofferzeuger;
Herstellen einer Menge an Wasserstoff aus der Menge an deionisiertem Wasser unter Verwendung besagten Wasserstofferzeugers;
Herstellen einer Menge an gereinigtem Wasserstoff am Einsatzort mittels Durchleiten besagter Menge an Wasserstoff durch ein Wasserstoffreinigungsgerät.

## Revendications

1. Procédé de production d'ammoniac au point d'utilisation à partir d'eau liquide et d'azote comprenant les étapes consistant à :
alimenter en une quantité d'eau désionisée un générateur d'hydrogène ;
produire une quantité d'hydrogène à partir de la quantité d'eau désionisée en utilisant ledit générateur d'hydrogène ;
produire une quantité d'hydrogène purifié en faisant passer ladite quantité d'hydrogène à travers un purificateur d'hydrogène ;
produire une quantité d'azote purifié en faisant passer une quantité d'azote à travers un purificateur d'azote ; et
mettre en contact ladite quantité d'hydrogène purifié et ladite quantité d'azote purifié avec un lit catalytique, dans lequel une fraction dudit hydrogène purifié et une fraction dudit azote purifié réagissent pour produire une quantité d'ammoniac au point d'utilisation.

2. Procédé selon la revendication 1, comprenant en outre une étape consistant à :
dégazer ladite quantité d'eau désionisée avant d'alimenter ledit générateur d'hydrogène en eau désionisée, pour éliminer une fraction des gaz dissous dans ladite quantité d'eau désionisée et
éventuellement, dans lequel en ce que ladite quantité d'eau désionisée est dégazée dans un contacteur à membrane, ayant un premier étage suivi d'un second étage, spécialement dans lequel ledit premier étage, une première fraction desdits gaz dissous est éliminée par revaporisation à l'azote, ou dans lequel ledit second étage, une seconde fraction desdits gaz dissous est éliminée par revaporisation sous vide.

3. Procédé selon la revendication 1, comprenant en outre une étape consistant à :
comprimer ladite quantité d'hydrogène purifié et ladite quantité d'azote purifié avant de mettre en contact ladite quantité d'hydrogène purifié et ladite quantité d'azote purifié avec ledit lit catalytique, et éventuellement, dans lequel ladite quantité d'hydrogène purifié et ladite quantité d'azote purifié sont comprimées à une pression absolue d'environ 10 à environ 100 atmosphères.

4. Procédé selon la revendication 1, comprenant en outre une étape consistant à :
produire une quantité d'ammoniac purifié au point d'utilisation en faisant passer ladite quantité d'ammoniac à travers un purificateur d'ammoniac.

5. Procédé selon la revendication 4, a) comprenant en outre une étape consistant à :
délivrer une fraction de ladite quantité d'ammoniac purifié à une unité de production de semi-conducteurs au point d'utilisation ; ou b) dans lequel ledit purificateur d'ammoniac comprend un oxyde métallique à superficie élevée comprenant les oxydes métalliques de baryum, de calcium, de fer, de lithium, de manganèse, de molybdène, de potassium, de rhénium, de sodium, de strontium, de titane, de tungstène ou de vanadium, ou
c) dans lequel au moins un parmi ledit purificateur d'ammoniac, ledit purificateur d'hydrogène et ledit purificateur d'azote est régénéré avec une fraction de ladite quantité d'hydrogène purifié, ou
d) dans lequel la concentration d'une impureté dans ladite quantité d'ammoniac purifié est réduite à moins d'environ 50 ppb, ou
e) dans lequel la concentration d'une impureté dans ladite quantité d'ammoniac purifié est réduite à moins d'environ 10 ppb.

6. Procédé selon la revendication 1, dans lequel
a) ledit purificateur d'hydrogène comprend un oxyde métallique à superficie élevée comprenant les oxydes de baryum, de calcium, de fer, de lithium, de manganèse, de molybdène, de nickel, de potassium, de rhénium, de sodium, de strontium, de titane, de tungstène ou de vanadium et éventuellement, du nickel métallique, ou
b) ledit purificateur d'azote comprend un catalyseur au nickel, ou bien
c) ledit générateur d'hydrogène produit de l'hydrogène à partir de l'eau par des moyens électrolytiques, ou
d) la concentration d'une impureté dans ladite quantité d'hydrogène purifié est réduite à moins d'environ 50 ppb, ou
e) la concentration d'une impureté dans ladite quantité d'azote purifié est réduite à moins d'environ 50 ppb, ou
f) la concentration d'une impureté dans ladite quantité d'hydrogène purifié est réduite à moins d'environ 10 ppb, ou
g) la concentration d'une impureté dans ladite quantité d'azote purifié est réduite à moins d'environ 10 ppb.

7. Procédé de production d'ammoniac au point d'utilisation à partir d'eau liquide et d'azote, comprenant les étapes consistant à :
dégazer une quantité d'eau désionisée pour éliminer une fraction de gaz dissous dans ladite quantité d'eau désionisée ;
alimenter en une quantité de ladite eau désionisée dégazée un générateur d'hydrogène ;
produire une quantité d'hydrogène à partir de la quantité ladite eau désionisée dégazée en utilisant ledit générateur d'hydrogène ;
produire une quantité d'hydrogène purifié en faisant passer ladite quantité d'hydrogène à travers un purificateur d'hydrogène ;
produire une quantité d'azote purifié en faisant passer une quantité d'azote à travers un purificateur d'azote ;
comprimer ladite quantité d'hydrogène purifié et ladite quantité d'azote purifié ;
mettre en contact la quantité comprimée d'hydrogène purifié et ladite quantité comprimée d'azote purifié avec un lit catalytique, dans lequel une fraction dudit hydrogène purifié et une fraction dudit azote purifié réagissent pour produire une quantité d'ammoniac ;
produire une quantité d'ammoniac purifié au point d'utilisation en faisant passer ladite quantité d'ammoniac à travers un purificateur d'ammoniac ; et
délivrer une fraction de ladite quantité d'ammoniac purifié à une unité de production de semi-conducteurs au point d'utilisation.

8. Procédé de production d'un gaz hydrogène purifié à partir d'eau liquide, au point d'utilisation comprenant les étapes consistant à :
alimenter un dégazeur en une quantité d'eau désionisée suffisante pour faire diminuer la concentration d'oxygène jusqu'à environ 1 ppb, ou inférieure, et le CO₂ à une concentration d'environ 1 ppm, ou inférieure ;
alimenter en ladite eau dégazée un générateur d'hydrogène ;
produire une quantité d'hydrogène à partir de la quantité d'eau désionisée en utilisant ledit générateur d'hydrogène ;
produire une quantité d'hydrogène purifié au point d'utilisation en faisant passer ladite quantité d'hydrogène à travers un purificateur d'hydrogène.
